# EUROPEAN PATENT APPLICATION

(11) **EP 1 728 613 A1**
(43) Date of publication of application: **06.12.2006**
(21) Application number: 05010512.1
(22) Date of filing: 13.05.2005
(51) Int. Cl.: B29C 44/22

(54) **A hollow plastic profile with internal plastic foam filling**

(71) Applicant: Pitac International Machinery Co., Ltd., Taipei (TW)
(72) Inventor: Lin, Yi-An, Taipei (TW)
(74) Representative: Viering, Jentschura & Partner

(57) **Abstract**

A process for producing hollow plastic profile with internal plastic foam filling (physical-blowing agent foaming) and the product thereof, comprises mainly extrusion molding a plastic material without blowing agent and a plastic material with a physical blowing agent separately with two extruders and feeding the thus-obtained two extrudates through a co-extruding die, which has inner and external flow channels, where the external flow channel guides the molded plastic material without a blowing agent to form the external frame skin of a hollow plastic profile while the plastic material with a blowing agent is guided by the inner flow channel to form the foam core, thereby the inside of the hollow plastic profile is packed fully with a plastic foam intimately fitted to the external skin, and after extruding through the co-extruding die, cooling to fix the shape, withdrawing and cutting, an extruded plastic profile with internal plastic foam filling is formed.

## Description

### BACKGROUND OF THE INVENTION

### 1. Field of the invention

The invention relates to a co-extruding process for producing a hollow Plastic-Profile with internal Plastic-foam-filling (by physical-blowing agent foaming) and to the product thereof, and in particular, to a process for producing said hollow Plastic-Profile with internal Plastic-foam-filling by co-extruding a plastic material without a blowing agent together with a plastic material with a blowing agent (by physical-blowing agent foaming) through a co-extruding die, characterized in that it can simplify the conventional process, lower production cost and shorten the procession time.

### 2. DESCRIPTION OF THE PRIOR ART

To manufacture a conventional Plastic-Profile, an extruder is first used to extrusion mold a plastic material without a blowing agent into a hollow Plastic-Profile. Next, a plastic foam is cut into pieces with an size approximate to the inner size of said hollow Plastic-Profile, and finally, said plastic foam piece is packed manually into the said hollow Plastic-Profile to accomplish the manufacture of the Plastic-Profile.

Regarding the current co-extruding technique for producing a hollow Plastic-Profile with internal Plastic-foam-filling (physical-blowing agent foaming), no integral molding technique has yet been developed. As for to the user, in order to achieve effects of sound insulation and heat insulation, it has to pack plastic foam (e.g., polylon, etc.) manually in the hollow Plastic-Profile after extruding of said profile. Unfortunately, under this circumstance, the plastic foam cannot fit intimately with the hollow Plastic-Profile and hence the surface of the Plastic-Profile tends to yield recesses thereon, and the strength of said Plastic-Profile might be influenced. Besides, the traditional process consumes inevitably great amount of manpower, time and money, cannot promote effectively the production performance. All of these will be a great burden and loss to the manufacturer. In view of these, the conventional process has still many deficiencies, is not a perfect way, and need to improve.

The co-extrusion of a plastic will become the developing tendency for the future extruding procession, in that the co-extrusion can combine characteristics from different plastics, increase the performance of the product and lower the production cost.

Accordingly, in view of the foregoing disadvantages derived from the conventional production process, the inventor of this application had devoted to improve and innovate it, and finally, after studying intensively for many years, has developed successfully a co-extruding process for producing a hollow Plastic-Profile with internal Plastic-foam-filling (physical-blowing agent foaming) according to the invention.

### SUMMARY OF THE INVENTION

These features and advantages of the present invention will be fully understood and appreciated from the following detailed description of the accompanying Drawings.

One object of the invention is to provide a co-extruding process for producing a hollow Plastic-Profile with internal Plastic-foam-filling (physical-blowing agent foaming) by using a novel co-extruding die design, wherein said die can extrude simultaneously a hollow Plastic-Profile and a plastic foam (physical-blowing agent foaming) to produce a integral hollow profile sheet. This process can avoid the second manual assembly, that is, to cut the plastic foam and pack the plastic foam piece into the inside of the hollow Plastic-Profile. Consequently, the inventive process can shorten the procession time, and lower the expense from the manpower.

Another object of the invention is to provide a hollow Plastic-Profile obtainable by the above-described co-extruding process.

Yet another object of the invention is to provide an external frame with good mechanical strength and without foaming effect, characterized in that it can avoid the disadvantage as forming recess on the external skin during extruding the conventional profile. The reason thereof resides on the intimate fit of the plastic foam (physical-blowing agent foaming) to the profile frame after the foaming of the plastic foam in the inside of the profile frame, where the internal pressure generated during the foaming can support the strength of the hollow Plastic-Profile, and prevent the formation of recess on the external skin of the Plastic-Profile as well as maintain a gloss surface properties and the integral strength. Further, excellent effects of sound insulation and heat insulation can be obtained by virtue of the micro-porous structure of the plastic foam (physical-blowing agent foaming).

The co-extruding process for producing a hollow profile sheet with internal Plastic-foam-filling the can achieve those above-mentioned object comprises extruding molding separately a plastic material without blowing agent and a plastic material with a blowing agent through two extruders, and feeding these two extruders into a co-extruding die, wherein said co-extruding die has a inner and a external flow channels, where the external flow channel guides the molded plastic material without a blowing agent to form the external frame skin of a hollow Plastic-Profile, while the plastic material with a blowing agent is guided by the inner flow channel to form the foam core (physical-blowing agent foaming), thereby the inside of the hollow Plastic-Profile is packed with a intimately fitted plastic foam (physical-blowing agent foaming), and finally, the extruder exits from the co-extruding die, is cooled to fix the shape on a shaping stage, and is withdrawn continuously by a withdrawing stage to a cutting stage where the cooled Plastic-Profile is cut to a length suitable for use, and thus a finished hollow Plastic-Profile with internal Plastic-foam-filling (physical-blowing agent foaming) is obtained.

### BRIEF DESCRIPTION OF THE DRAWINGS

Figure 1 is a schematic view showing the co-extruding process for producing a hollow Plastic-Profile with internal Plastic-foam-filling and the product thereof;

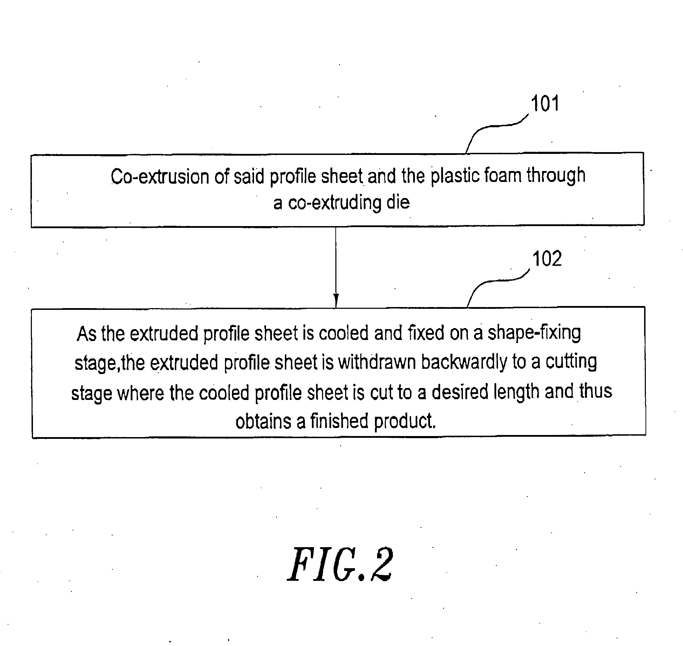

Figure 2 is a flow chart showing the co-extruding process for producing a hollow Plastic-Profile with internal Plastic-foam-filling (physical-blowing agent foaming) and the product thereof; and
Figure 3 is a view showing the product produced by the co-extruding process for producing a hollow Plastic-Profile with internal Plastic-foam-filling (physical-blowing agent foaming).

### DETAILED DESCRIPTION OF THE PREFERRED EMBODIMENT

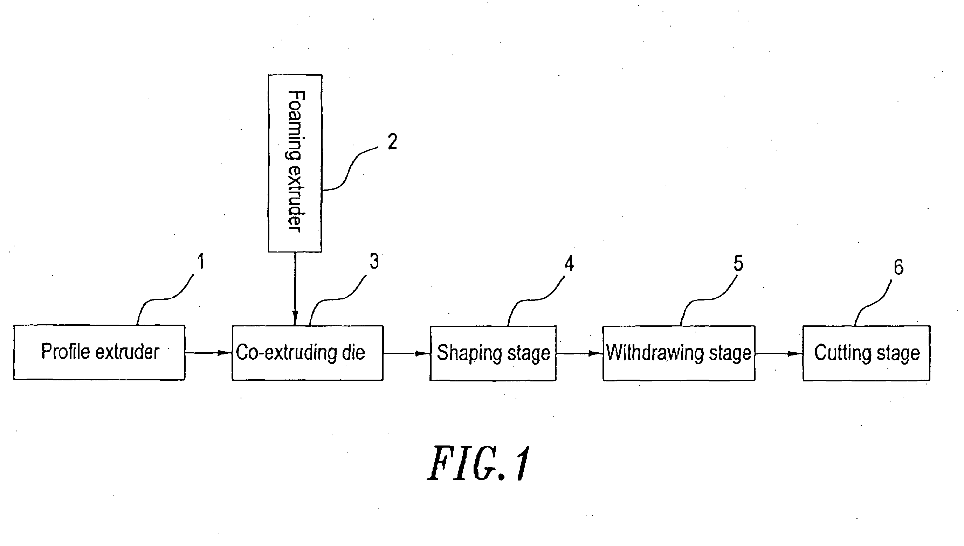

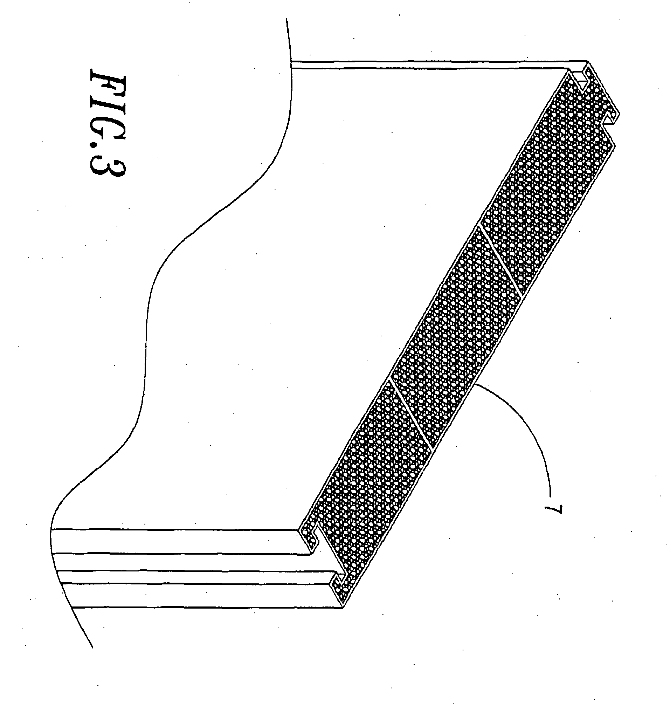

Referring to Fig. 1 and 3, the co-extruding process for producing a hollow Plastic-Profile with internal Plastic-foam-filling (physical-blowing agent foaming) comprises mainly following steps:
step 1: feeding separately a plastic material without a blowing agent molded through a profile extruder 1 and a plastic material together with a blowing agent molded through a foaming extruder 2 into a common co-extruding die 3, wherein said co-extruding die 3 has a inner and a external flow channels, where the external flow channel guides the molded plastic material without a blowing agent to form the external frame skin of a hollow Plastic-Profile, while the plastic material with a blowing agent is guided by the inner flow channel to form the foam core (physical-blowing agent foaming), thereby the inside of the hollow Plastic-Profile is packed fully with a plastic foam (physical-blowing agent foaming) intimately fitted to the external skin; wherein the external plastic material can be polyvinyl chloride (PVC) or other moldable plastic material, while the plastic material of the plastic foam can be polystyrene (PS), polyurethane (PR) or other plastic material 101 that can be foamed; and
step 2: after said Plastic-Profile exiting from the co-extruding die, cooling it to fix the shape on a shaping stage 4, being withdrawn continuously by a withdrawing stage 5 to a cutting stage 6 where the cooled Plastic-Profile is cut to a length suitable for use, and thus a finished product 7 is obtained (as shown in Fig. 3) 102.

In another aspect, the invention provides a hollow Plastic-Profile produced by the co-extruding process for producing a hollow Plastic-Profile with internal. Plastic-foam-filling according to the invention, characterized in that the product has a enhanced integral structure, exhibits a flat and gloss surface, and can give excellent effects of sound insulation and heat insulation.

The co-extruding process for producing a hollow Plastic-Profile with internal Plastic-foam-filling (physical-blowing agent foaming) and the product thereof exhibit following advantages over other conventional techniques:
1. Since the co-extruding die can extrude simultaneously the hollow Plastic-Profile frame and the plastic foam (physical-blowing agent foaming), the plastic foam piece needs no longer be packed manually into the hollow Plastic-Profile as in the conventional process, and hence the production time can be shortened and the manpower cost can be lowered.
2. Since no foaming is occurred in the hollow Plastic-Profile frame, the Plastic-Profile will exhibit good mechanical strength. Besides, since the plastic foam (physical-blowing agent foaming) can fit completely and sufficiently to the hollow Plastic-Profile, the internal pressure generated therein can support effectively the strength of the hollow Plastic-Profile, and thereby, the Plastic-Profile can prevent formation of recess on its external skin, can maintain a gloss surface and an integral strength, as well as exhibit excellent sound and heat insulation effects owing to the micro-porous structure of the plastic foam.

Many changes and modifications in the above-described embodiment of the invention can, of course, be carried out without departing from the scope thereof. Accordingly, to promote the progress in science and the useful arts, the invention is disclosed and is intended to be limited only by the scope of the appended claims.

## Claims

1. A co-extruding process for producing a hollow Plastic-Profile with internal Plastic-foam-filling, the process comprises mainly the following steps:
step 1: feeding separately a plastic material without a blowing agent molded through a profile extruder 1 and a plastic material together with a blowing agent molded through a foaming extruder into a common co-extruding die 3, wherein said co-extruding die 3 has a inner and a external flow channels, where the external flow channel guides the molded plastic material without a blowing agent to form the external frame skin of a hollow Plastic-Profile, while the plastic material with a blowing agent is guided by the inner flow channel to form the foam core, thereby the inside of the hollow Plastic-Profile is packed fully with a plastic foam intimately fitted to the external skin, and after extruding through the co-extruding die, a Plastic-Profile extruder is formed ; and
step 2: after said Plastic-Profile exiting from the co-extruding die, cooling it to fix the shape on a shaping stage 4, being withdrawn continuously by a withdrawing stage 5 to a cutting stage 6 where the cooled Plastic-Profile is cut to a length suitable for use, and thus a finished product 7 is obtained.

2. A co-extruding process for producing a hollow Plastic-Profile with internal Plastic-foam-filling as cited in claim 1, wherein the plastic material for the external skin is polyvinyl chloride (PVC) or other moldable plastic material.

3. A co-extruding process for producing a hollow Plastic-Profile with internal Plastic-foam-filling as cited in claim 1, wherein the plastic material with a blowing agent is polystyrene (PS), polyurethane (PR) or other plastic material that can be foamed.

4. A co-extruding process for producing a hollow Plastic-Profile with internal Plastic-foam-filling as cited in claim 1, wherein said plastic material with a blowing agent is foamed through a physical-blowing agent foaming process.

5. A hollow Plastic-Profile with internal Plastic-foam-filling obtainable by the co-extruding process for producing a hollow Plastic-Profile with internal Plastic-foam-filling as cited in claim 1 wherein said product 7, the hollow Plastic-Profile is produced by packing a simultaneously molded plastic foam into the inside of a molded hollow Plastic-Profile.
